# EUROPEAN PATENT APPLICATION

(11) **EP 2 988 192 A1**
(43) Date of publication of application: **24.02.2016**
(21) Application number: 14181571.2
(22) Date of filing: 20.08.2014
(51) Int. Cl.: G06F 3/01, G06F 1/32

(54) **Apparatus for providing touchless user interface**

(71) Applicant: Posterfy Oy, 02600 Espoo (FI)
(72) Inventor: Hjelt, Kari Tapani, 02710 Espoo (FI); Mattila, Tomi Juha Petteri, 02140 Espoo (FI)
(74) Representative: Becker Kurig Straus

(57) **Abstract**

An apparatus for providing a touchless user interface is provided. The apparatus includes a display, a gesture sensing system, a processor and computer-readable program code stored in a memory. One or more content items to be displayed on the display and gesture sensing system configuration data for these content items are stored in the memory. The processor, with the computer-readable program code, is configured to display at least one of the content items on the display. The processor, with the computer-readable program code, is configured to employ the gesture sensing system to identify one or more gestures according to the gesture sensing system configuration data for the at least one of the content items.

## Description

### TECHNICAL FIELD

The present disclosure relates generally to interactive terminals; and more specifically, to apparatus for providing touchless user interfaces. Moreover, the present disclosure relates to methods of operating displays with gesture sensing systems. Furthermore, the present disclosure relates to computer program products comprising non-transitory computer-readable data storage media having stored thereon computer-readable program code executable by one or more processors to implement the aforementioned methods.

### BACKGROUND

Today, interactive terminals are being used increasingly in public places for various purposes, for example, for displaying advertisements. Such interactive terminals can be battery-operated. The battery-powered solutions have the disadvantage of requiring replacement or recharging of their batteries from time-to-time. Replacing or recharging a battery is time-consuming and expensive. Therefore, it is desirable to minimize power consumption of such interactive terminals to maximize a lifetime of their batteries.

Document US 2008/0238706 discloses an apparatus and method for making a printed display to become interactive when a person points to a part of the display. This is carried out with capacitative proximity sensors printed with conductive inks connected to a proximity-sensing circuitry. Audio-visual or multimedia responses using pre-recorded or synthetised information are reproduced in event of a selection.

One conventional technique for minimizing power consumption of an interactive terminal involves using two different modes of operation, namely a stand-by mode with low power consumption and an active mode with high power consumption. This conventional technique is able to reduce power consumption to some extent.

In light of the foregoing, there exists a need for an improved apparatus that is capable of reducing power consumption to a greater extent, as compared to conventional interactive terminals.

### SUMMARY

The present disclosure seeks to provide an improved apparatus for providing a touchless user interface.

Moreover, the present disclosure seeks to provide an improved method of operating a display with a gesture sensing system.

In one aspect, embodiments of the present disclosure provide an apparatus for providing a touchless user interface. The apparatus includes a display, a gesture sensing system, a processor and computer-readable program code stored in a memory. The gesture sensing system includes a plurality of radiation sources and one or more sensors for sensing radiation emitted by the plurality of radiation sources.

One or more content items to be displayed on the display and gesture sensing system configuration data for the one or more content items are stored in the memory.

The processor, with the computer-readable program code, is configured to display at least one of the one or more content items on the display. Optionally, the at least one of the one or more content items includes one or more instructions for a user to perform one or more gestures defined for the at least one of the one or more content items. The one or more instructions are beneficially based on the gesture sensing system configuration data for the at least one of the one or more content items.

The processor, with the computer-readable program code, is configured to employ the gesture sensing system to identify the one or more gestures according to the gesture sensing system configuration data for the at least one of the one or more content items.

Optionally, for a given content item, the gesture sensing system configuration data includes information pertaining to one or more of:
(i) one or more gestures defined for the given content item;
(ii) a resolution to be used for gesture identification;
(iii) a number of sensing dimensions to be used for gesture identification;
(iv) at least one detection method to be used for gesture identification;
(v) a polling cycle time to be used for gesture identification;
(vi) a number of radiation sources and a number of sensors to be energized for gesture identification;
(vii) a geometry of the radiation sources and the sensors to be energized for gesture identification; and/or
(viii) an amount of power to be applied to energized radiation sources for gesture identification.

Moreover, optionally, the processor, with the computer-readable program code, is configured to determine a next content item for display, based on the one or more gestures as identified by the gesture sensing system, and to display the next content item on the display.

In another aspect, embodiments of the present disclosure provide a method of operating a display with a gesture sensing system.

In yet another aspect, embodiments of the present disclosure provide a computer program product comprising a non-transitory computer-readable data storage medium having stored thereon computer-readable program code, which is executable by a processor to implement the aforementioned method.

Embodiments of the present disclosure substantially eliminate or at least partially address the aforementioned problems in the prior art, and enable an apparatus to dynamically control its gesture sensing system to reduce power consumption of the gesture sensing system.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:
- Fig. 1: is a schematic illustration of an example network environment that is suitable for practicing embodiments of the present disclosure;
- Fig. 2: is a schematic illustration of an example implementation of an apparatus and various components thereof, in accordance with an embodiment of the present disclosure;
- Fig. 3: is a schematic illustration of a first example implementation of a gesture sensing system and various components thereof, in accordance with an embodiment of the present disclosure;
- Fig. 4: is a schematic illustration of a second example implementation of the gesture sensing system and various components thereof, in accordance with an embodiment of the present disclosure;
- Fig. 5: is an illustration of an example UI flow, in accordance with an embodiment of the present disclosure;
- Fig. 6: is an illustration of steps of a method of operating a display with a gesture sensing system, in accordance with an embodiment of the present disclosure;
- Fig. 7: is a schematic illustration of a further example implementation of an apparatus and various components thereof, in accordance with an embodiment of the present disclosure;
- Fig. 8: is an exemplary schematic flow chart according to one aspect of the present disclosure; and
- Fig. 9: is a schematic illustration of a system according to an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although the best mode of carrying out the present disclosure has been disclosed, those skilled in the art would recognize that other embodiments for carrying out or practicing the present disclosure are also possible.

A typical apparatus comprises
- a display;
- a gesture sensing system;
- a processor; and
- a computer-readable program code stored in a memory,
wherein the processor, with the computer-readable program code, is configured to:
- store one or more content items to be displayed on the display and a gesture sensing system configuration data for the one or more content items;
- display at least one of the one or more content items on the display; and
- employ the gesture sensing system to identify one or more gestures according to the gesture sensing system configuration data for the at least one of the one or more content items.

According to an embodiment, the gesture sensing system configuration data includes a resolution and a number of sensing dimensions to be used for gesture identification. The gesture sensing system configuration data may include at least one detection method to be used for gesture identification. Moreover, the at least one detection method may include one or more of the following: a position-based detection method and/or a phase-based detection method. The gesture sensing system configuration data may also include a polling cycle time to be used for gesture identification.

According to an embodiment, the gesture sensing system comprises
- a plurality of radiation sources; and
- one or more sensors,
wherein the gesture sensing system configuration data includes a number of radiation sources and a number of sensors to be energized for gesture identification.

According to a further embodiment, the gesture sensing system configuration data includes a geometry of the radiation sources and the sensors to be energized for gesture identification. The gesture sensing system configuration data can also include an amount of power to be applied to energized radiation sources.

According to another embodiment, the processor, with the computer-readable program code, is configured to
- determine a next content item for display, based on the one or more gestures identified by the gesture sensing system; and
- display the next content item on the display.

Moreover, the at least one of the one or more content items may for example include one or more instructions for a user to perform one or more gestures defined for the at least one of the one or more content items, wherein the one or more instructions are based on the gesture sensing system configuration data for the at least one of the one or more content items.

A typical method of operating a display with a gesture sensing system comprises
- storing, in a memory, one or more content items to be displayed on the display and gesture sensing system configuration data for the one or more content items;
- displaying at least one of the one or more content items on the display; and
- employing the gesture sensing system to identify one or more gestures according to the gesture sensing system configuration data for the at least one of the one or more content items.

The method may further comprise the step of using a resolution and a number of sensing dimensions for gesture identification according to the gesture sensing system configuration data. It can also comprise using one or more of a position-based detection method and/or a phase-based detection method for gesture identification according to the gesture sensing system configuration data. The method may still comprise using a polling cycle time for gesture identification according to the gesture sensing system configuration data.

According to another embodiment, the method comprises determining a number of radiation sources and a number of sensors to be energized for gesture identification from the gesture sensing system configuration data.

The method can yet further comprise
- determining a geometry of the radiation sources and the sensors to be energized for gesture identification from the gesture sensing system configuration data; and
- energizing the radiation sources and the sensors according to the geometry determined from the gesture sensing system configuration data.

Furthermore, the method may comprise applying an amount of power to energized radiation sources according to the gesture sensing system configuration data.

Alternatively, the method may comprise
- determining a next content item for display based on the one or more gestures identified by the gesture sensing system; and
- displaying the next content item on the display.

According to yet another embodiment, the method comprises providing, within the at least one of the one or more content items, one or more instructions for a user to perform one or more gestures defined for the at least one of the one or more content items, wherein the one or more instructions are based on the gesture sensing system configuration data for the at least one of the one or more content items.

A typical computer program product comprises a non-transitory computer-readable data storage medium having stored thereon a computer-readable program code for operating a display with a gesture sensing system, the computer-readable program code being executable by a processor to
- store one or more content items to be displayed on the display and gesture sensing system configuration data for the one or more content items;
- display at least one of the one or more content items on the display; and
- employ the gesture sensing system to identify one or more gestures according to the gesture sensing system configuration data for the at least one of the one or more content items.

The network environment may be implemented in various ways, depending on various possible scenarios. In one example, the network environment may be implemented by way of a spatially collocated arrangement of the server and the database. In another example, the network environment may be implemented by way of a spatially distributed arrangement of the server and the database coupled mutually in communication via a communication network, such as the communication network. In yet another example, the server and the database may be implemented via cloud-based computing services.

The communication network couples the apparatus to the server, and provides a communication medium between the apparatus and the server for exchanging data amongst themselves. It may be noted here that the apparatus may be coupled to the server periodically or randomly.

The communication network can be a collection of individual networks, interconnected with each other and functioning as a single large network. Such individual networks may be wired, wireless, or a combination thereof. Examples of such individual networks include, but are not limited to, Local Area Networks (LANs), Wide Area Networks (WANs), Metropolitan Area Networks (MANs), Wireless LANs (WLANs), Wireless WANs (WWANs), Wireless MANs (WMANs), the Internet, second generation (2G) telecommunication networks, third generation (3G) telecommunication networks, fourth generation (4G) telecommunication networks, satellite-based telecommunication networks, Worldwide Interoperability for Microwave Access (WiMAX) networks, and short-range wireless communications network, such as a "Bluetooth" network ("Bluetooth" is a registered trademark).

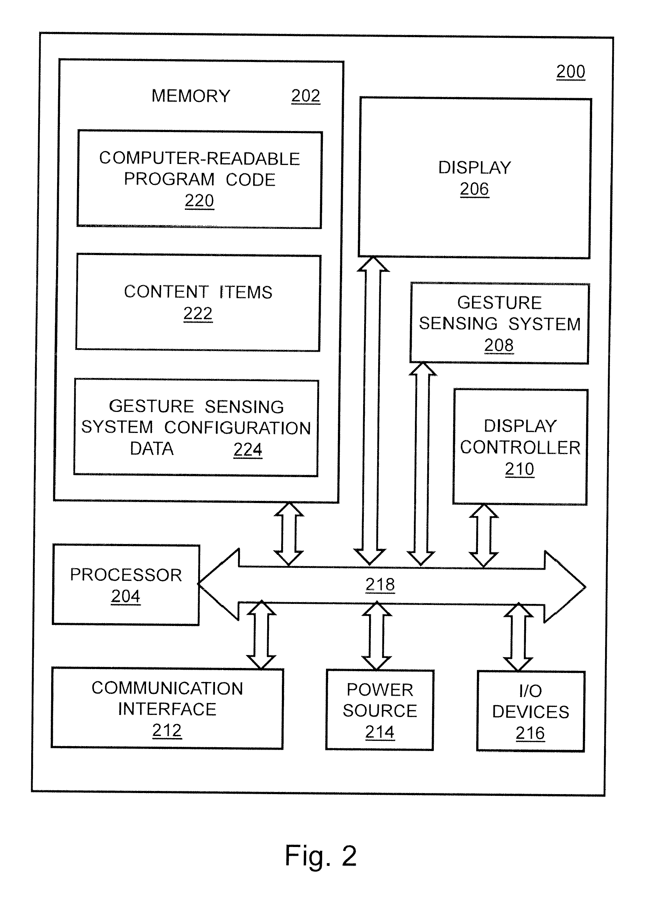

In some examples, each of the apparatus may be implemented by way of a computing device that includes computing hardware, such as a processor, which is operable to execute computer-readable program code for operating the display with the gesture sensing system, pursuant to embodiments of the present disclosure. The computer-readable program code could be stored in a memory or on a non-transitory computer-readable data storage medium. Examples of such computing devices include, but are not limited to, vending machine, advertisement terminal, a device installed in a towel dispenser, mobile phones, smart telephones, Mobile Internet Devices (MIDs), tablet computers, Ultra-Mobile Personal Computers (UMPCs), phablet computers, Personal Digital Assistants (PDAs), web pads, Personal Computers (PCs), handheld PCs, laptop computers, desktop computers, large-sized displays with embedded PCs, and other interactive devices, such as Television (TV) sets and Set-Top Boxes (STBs). An example apparatus has been illustrated in conjunction with Fig. 2 below.

Optionally, the server is operable to provide the apparatus with one or more content items to be displayed and gesture sensing system configuration data for these content items.

A given apparatus from the apparatus, namely the processor of the given apparatus with the computer-readable program code, is operable to display at least one of the one or more content items on its display. The at least one of the one or more content items optionally includes one or more instructions for a user to perform one or more gestures defined for the at least one of the one or more content items. The one or more instructions are beneficially based on the gesture sensing system configuration data for the at least one of the one or more content items.

When the user performs a gesture from amongst the one or more gestures, the gesture sensing system of the given apparatus is employed to identify the gesture according to the gesture sensing system configuration data for the at least one of the one or more content items.

Optionally, the processor of the given apparatus with the computer-readable program code is configured to determine a next content item for display, based on the gesture performed by the user, namely the gesture as identified by the gesture sensing system, and to display the next content item on the display.

In this manner, each of the apparatuses provides a touchless User Interface (UI) to its users, and enables the users to control display of content items.

As noted earlier, the apparatus may be coupled to the server periodically or randomly, for example, for receiving, from the server, new content items to be displayed and their corresponding gesture sensing system configuration data, and/or software updates.

Optionally, the apparatus are operable to collect statistical data pertaining to usage and display of the content items. Optionally, for a given apparatus from amongst the apparatus, the statistical data pertains to at least one of:
(i) a number of times a given content item has been displayed and associated time stamps;
(ii) a number of user interactions, namely, a number of users who interacted with the given apparatus, and associated time stamps; and/or
(iii) a duration of each user interaction.

Optionally, the apparatus are operable to send the statistical data to the server from time-to-time. This enables the serverto analyse the statistical data, for example, to determine most popular content items and/or most popular gestures. Determination of the most popular content items is potentially beneficial for publishers and/or creators of these content items, while determination of the most popular gestures is potentially beneficial for UI designers.

Furthermore, optionally, the network environment is suitable for implementing various applications. The apparatus are beneficially installed at different spatial locations to serve various purposes. In one example, the apparatus are implemented by way of interactive display terminals. These interactive display terminals can be used for displaying advertisements. In another example, the apparatus are implemented by way of vending machines.

The apparatus may also include a power source for supplying electrical power to the various components of the apparatus. Optionally, the power source includes one or more batteries. These batteries may be either rechargeable or non-rechargeable. A limiting factor for the operation of the apparatus is an amount of electricity stored in the batteries. The amount of electricity may, for example, be measured in milliWatt-hours (mWh) or in Ampere hours (Ah) for a battery. Parameters influencing the amount of electricity stored in the batteries include a size of the batteries and/or an energy density of the batteries. Additionally, optionally, the apparatus can be connected to an external power source, such as a charger or a power harvester, such as a photovoltaic cell.

Moreover, the memory may be volatile or non-volatile. The memory optionally includes non-removable memory, removable memory, or a combination thereof. The non-removable memory, for example, includes Random-Access Memory (RAM), Read-Only Memory (ROM), flash memory, or a hard drive. The removable memory, for example, includes flash memory cards, memory sticks, or smart cards.

Optionally, the memory stores a computer-readable program code for operating the display with the gesture sensing system. Optionally, the memory also stores one or more content items, and gesture sensing system configuration data for the content items. Examples of the content items include, but are not limited to, images, videos, and HyperText Markup Language (HTML) content.

Optionally, for a given content item from amongst the content items, the gesture sensing system configuration data includes information pertaining to one or more UI parameters. These UI parameters include at least one of:
(i) one or more gestures defined for the given content item;
(ii) a resolution to be used for gesture identification;
(iii) a number of sensing dimensions to be used for gesture identification, namely one, two or three dimensions;
(iv) at least one detection method to be used for gesture identification;
(v) a polling cycle time to be used for gesture identification;
(vi) a number of radiation sources and a number of sensors of the gesture sensing system to be energized for gesture identification;
(vii) a geometry of the radiation sources and the sensors to be energized for gesture identification; and/or
(viii) an amount of power to be applied to energized radiation sources for gesture identification.

Optionally, the gesture sensing system configuration data is stored in a database table. The database table optionally stores pre-defined values of the aforementioned UI parameters.

In one embodiment of the present disclosure, the display is a low power bi-stable display, for example, such as an electrophoretic electronic-ink display. The bi-stable display consumes power only when a content item displayed on the display is changed, namely when a next content item is displayed.

Moreover, optionally, the apparatus includes a display controller for controlling the display.

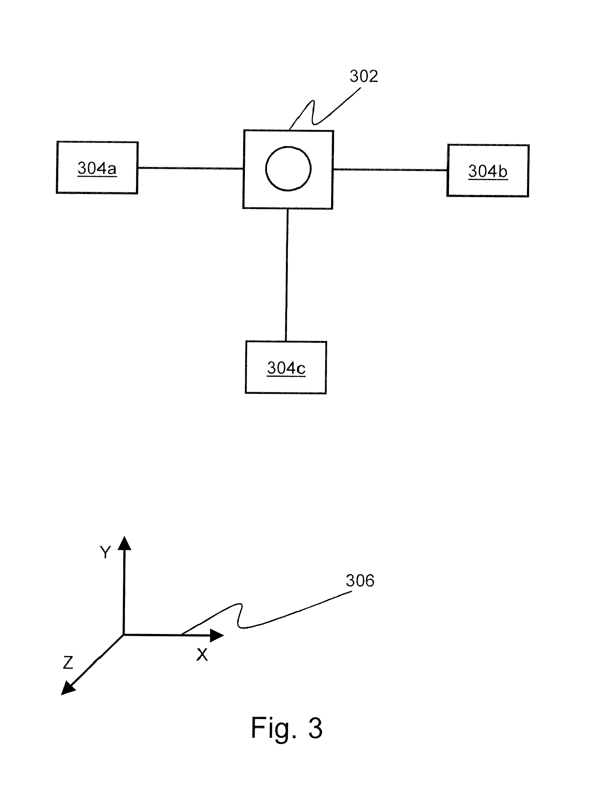

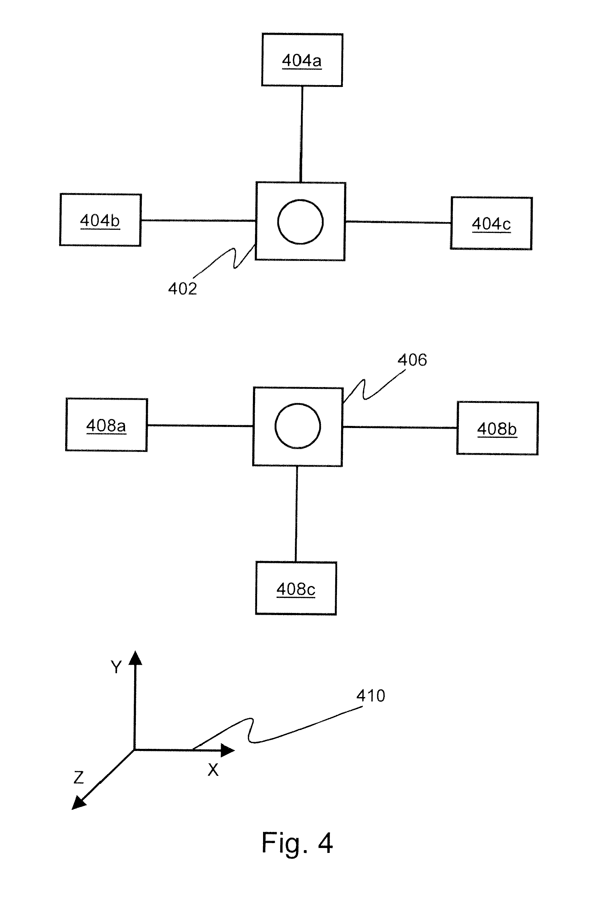

The gesture sensing system enables the apparatus to provide a touchless UI that allows one or more users to interact with the apparatus. Some example implementations of the gesture sensing system have been provided in conjunction with Figs. 3 and 4 below.

Optionally, the apparatus also includes one or more Input/Output (I/O) devices in addition to the display and the gesture sensing system. In an example, the I/O devices include one or more Light Emitting Diodes (LED) for providing visual instructions to a user, a speaker and/or a headphone for providing an audio output and/or audio instructions to a user.

When executed on the processor, the computer-readable program code is configured to perform operations as described above, namely one or more of:
(i) display at least one of the content items on the display;
(ii) provide one or more instructions for the user to perform one or more gestures defined for the at least one of the content items;
(iii) employ the gesture sensing system to identify a gesture performed by the user according to the gesture sensing system configuration data for a currently-displayed content item, namely the at least one of the content items displayed on the display;
(iv) determine a next content item from amongst the content items for display, based on the gesture performed by the user; and
(v) display the next content item on the display.

In accordance with an embodiment of the present disclosure, when employing the gesture sensing system for gesture identification, the processor executes the computer-readable program code to configure the gesture sensing system based on one or more gestures defined for the currently-displayed content item, the resolution and/or the number of sensing dimensions that are required for gesture identification. In this regard, the gesture sensing system is configured to use a suitable detection method, namely a position-based detection method or a phase-based detection method, based on the defined gestures and/or the required resolution.

In this manner, the apparatus enables defining UI parameters for each of the content items individually. This is potentially beneficial for optimizing performance of the apparatus, for example, by reducing power consumption of the gesture sensing system, namely power consumed during polling cycles of the touchless UI.

The radiation sources mentioned above can be for example Infra-Red Light-Emitting Diodes (IR-LEDs), while the sensor can be a proximity and/or ambient light sensor, such as an Si114x available from Silicon Laboratories, Inc.

The radiation sources may be positioned around the sensor, to enable gesture identification in two or three dimensions. In Fig. 3, there is shown an XYZ coordinate system to indicate that the first example implementation of the gesture sensing system is suitable for identifying multi-dimensional gestures.

The sensor may function by sending driving pulses to the radiation sources, based on the gesture sensing system configuration data for the currently-displayed content item. Consequently, upon receiving their corresponding driving pulses, the radiation sources get energized and emit radiation. The emitted radiation then reflects from a pointing object, such as a user's hand or a user's finger, and reaches the sensor.

The sensor then collects sensor data, for example, based on an intensity of the reflected radiation received at the sensor, and sends the sensor data to the processor. When executed on the processor, the computer-readable program code analyses the sensor data to determine one or more positions of the pointing object relative to the gesture sensing system, and to identify a corresponding gesture performed by the user.

There will now be described some examples of how gestures are identified.

### Example 1

In a first example, a position-based detection method for identifying gestures is used.

An object placed near a given radiation source reflects more radiation than an object placed far away from the given radiation source. Therefore, the intensity of the reflected radiation received by the sensor is used to determine a distance between the pointing object and a given radiation source at a given time. Thereafter, a position of the pointing object is determined from distances between the pointing object and the radiation sources, for example, using equations for an intersection of circles. In this manner, different positions of the pointing object at different times are determined to identify the gesture performed by the user.

### Example 2

In a second example, a phase-based detection method for identifying gestures is used. The sensor data is analysed to determining a timing of changes in the intensity of the reflected radiation received from each of the radiation sources. It will be appreciated that a maximum intensity of the reflected radiation received from a given radiation source occurs when the pointing object is right above the given radiation source.

If the user swipes his/her hand across the radiation sources, a direction of the swipe can be determined by determining one or more radiation sources from amongst the radiation sources for which the maximum intensity of the reflected radiation occurred first. Thus, the phase-based detection method detects each gesture on either an entry or an exit from a detectable area spanned by the radiation sources.

With reference to a system with three radiation sources (as shown below in connection with Fig. 3, please refer to the drawing for the directions), in an event that the maximum intensity occurred first for a first radiation source, then for a second radiation source, and finally for a third radiation source, it can be determined that the user swiped his/her hand from right to left along an X-direction.

In an event that the maximum intensity occurred first for both a first and a second radiation source and then for a third radiation source, it is determined that the user swiped his/her hand from up to down along a Y-direction.

In an event that the intensity for all of the radiation sources increased continuously from a beginning of a polling cycle to an end of the polling cycle, it is determined that the user pushed his/her hand towards the apparatus, namely, along a Z-direction.

Therefore, it will be appreciated that the first example implementation of the gesture sensing system is sufficient for identifying gestures in X, Y and Z directions, namely multi-dimensional gestures.

The phase-based detection method is simple to use, and is very reliable for detecting hand swipe gestures over the detectable area spanned by the radiation sources. However, the phase-based detection method is not suited for continuous measurement of hand positions. When position measurement is required, the position-based detection method is to be used.

Thus, the phase-based detection method works best, for example, for purposes of content browsing, such as for browsing through a carousel or gallery of content items. On the other hand, the position-based detection method is better suited, for example, for purposes of controlling the touchless UI ratiometrically and/or menu selection, such as for moving to a desired product and selecting by a push gesture. Therefore, it is advantageous to dynamically alter the detection method to be used, for example, based on the currently-displayed content item. In this regard, the gesture sensing system configuration data for a given content item optionally includes at least one detection method to be used for identifying one or more gestures defined for the given content item. This potentially enables the apparatus to dynamically alter the detection method according to the currently-displayed content item.

Furthermore, it is to be noted that the gesture sensing system includes three radiation sources, namely first, second and third radiation sources, as identification of two-dimensional gestures requires more than two radiation sources. However, when identification of one-dimensional gestures is required, one of the radiation sources can be disabled. Power consumption for energizing two radiation sources is approximately 33.33 % lower than that for energizing three radiation sources. Therefore, disabling one of the radiation sources during identification of one-dimensional gestures potentially leads to a significant power saving.

In this regard, the gesture sensing system configuration data for a given content item optionally includes a number of sensing dimensions to be used, a number of radiation sources and a number of sensors to be energized and/or a geometry of the radiation sources and the sensor to be energized for identifying one or more gestures defined for the given content item. Additionally, optionally, the gesture sensing system configuration data includes an amount of power to be applied to energized radiation sources. This potentially enables the apparatus to reduce power consumption.

Moreover, for a high resolution, the gesture sensing system optionally includes additional dedicated hardware components, such as high-power IRLEDs and/or high-resolution proximity sensors. Continuous usage of such high-power IRLEDs and/or high-resolution proximity sensors increases the power consumption of the apparatus, which is highly undesirable.

In an example, for reliably detecting a swipe movement by a user's hand, the polling cycle of the touchless UI, namely a duration for which the touchless UI is active between beginning and end measurements of radiation reflectance, can be set to approximately 10 milliseconds (ms), namely one polling per 10 ms. This typically leads to a power drain of approximately six milliWatts (6 mW) during the polling cycle.

If a higher resolution is required, for example, for reliably detecting a swipe movement by a user's finger, the polling cycle can be set to approximately one millisecond (1 ms), namely one polling per 1 ms. This typically leads to a power drain of approximately 60 milliWatts (60 mW) during the polling cycle. It is evident that the power drain for the higher resolution is much higher than that for a lower resolution.

To summarize, the power consumption of the apparatus is a function of a resolution and a number of sensing dimensions required for gesture identification. In order to reduce power consumption of the apparatus, the gesture sensing system is beneficially operated in a suitable power mode selected from amongst a plurality of power modes illustrated in an example table below.

| Power Mode | Explanation |
|---|---|
| P1 | This is an optional stand-by mode of the touchless UI. |
| | In this mode, polling is performed at a low frequency, for example, such as every 200 ms. |
| P2 | This is a one-dimensional mode with a low resolution. |
| | This mode is configured to recognize a one-dimensional hand gesture, for example, such as a hand movement in the X-direction or the Y-direction or the Z-direction. |
| | In this mode, the polling is performed at a medium frequency, for example, such as every 10 ms. |
| P3 | This is a one-dimensional mode with a high resolution. |
| | This mode is configured to recognize a one-dimensional finger gesture, for example, such as a finger movement in the X-direction or the Y-direction or the Z-direction. |
| | In this mode, the polling is performed at a high frequency, for example, such as every 1 ms. |
| P4 | This is a two-dimensional mode with a low resolution. |
| | This mode is configured to recognize a two-dimensional hand gesture, for example, such as a hand movement in any two of the X, Y and Z directions. |
| | In this mode, the polling is performed at the medium frequency, for example, such as every 10 ms. |
| P5 | This is a two-dimensional mode with a high resolution. |
| | This mode is configured to recognize a two-dimensional finger gesture, for example, such as a finger movement in any two of the X, Y and Z directions. |
| | In this mode, the polling is performed at the high frequency, for example, such as every 1 ms. |
| P6 | This is a three-dimensional mode with a low resolution. |
| | This mode is configured to recognize a three-dimensional hand gesture, for example, such a hand movement in the X, Y and Z directions. |
| | In this mode, the polling is performed at the medium frequency, for example, such as every 10 ms. |
| P7 | This is a three-dimensional mode with a high resolution. |
| | This mode is configured to recognize a three-dimensional finger gesture, for example, such a finger movement in the X, Y and Z directions. |
| | In this mode, the polling is performed at the high frequency, for example, such as every 1 ms. |

The gesture sensing system may be for example an IR radiation sensor, a touchless capacitive sensor, an ultrasonic sensor, and/or a Radio-Frequency (RF) sensor.

Embodiments of the present disclosure are susceptible to being used for various purposes, including, though not limited to, enabling an apparatus to dynamically control its gesture sensing system to reduce power consumption of the gesture sensing system.

### DETAILED DESCRIPTION OF THE DRAWINGS

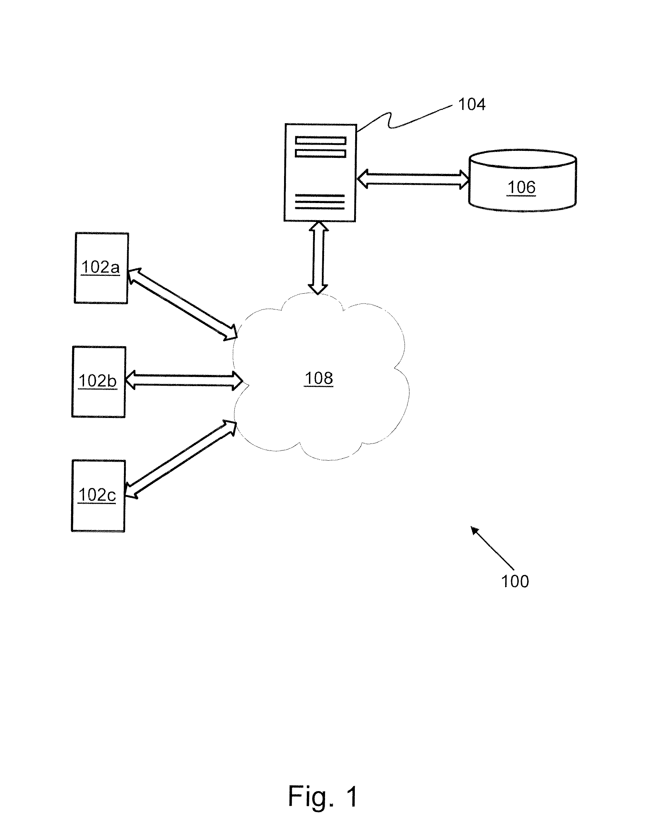

Fig. 1 is a schematic illustration of an example network environment **100** that is suitable for practicing embodiments of the present disclosure. The network environment **100** includes one or more apparatus, depicted as an apparatus **102a,** an apparatus **102b** and an apparatus **102c** in Fig. 1 (hereinafter collectively referred to as apparatus **102).** The network environment **100** also includes a server **104,** a database **106** associated with the server **104,** and a communication network **108** that couples the apparatus **102** to the server **104.** Each of the apparatus **102** includes a display and a gesture sensing system.

Fig. 1 is merely an example, which should not unduly limit the scope of the claims herein. It is to be understood that the specific designation for the network environment **100** is provided as an example and is not to be construed as limiting the network environment **100** to specific numbers, types, or arrangements of apparatus, servers, databases, and communication networks. A person skilled in the art will recognize many variations, alternatives, and modifications of embodiments of the present disclosure.

Fig. 2 is a schematic illustration of an example implementation of an apparatus **200** and various components thereof, in accordance with an embodiment of the present disclosure. The apparatus **200** could be implemented in a manner that is similar to the implementation of the apparatus **102** as described in conjunction with Fig. 1. Moreover, each of the apparatus **102** could be implemented in a manner that is similar to the example implementation of the apparatus **200.**

The apparatus **200** includes, but is not limited to, a memory **202,** a processor **204,** a display **206,** a gesture sensing system **208,** and a system bus **210** that operatively couples various components including the memory **202,** the processor **204,** the display **206** and the gesture sensing system **208.** The apparatus **200** also includes a power source **214** for supplying electrical power to the various components of the apparatus **200.** Moreover, optionally, the apparatus **200** also includes a communication interface **212.**

In this embodiment, the memory **202** stores computer-readable program code **212** for operating the display **206** with the gesture sensing system **208.** Furthermore the memory **202** also stores one or more content items **222,** and gesture sensing system configuration data **224** for the content items **222.** Moreover, in this embodiment, the apparatus **200** includes a display controller **210** for controlling the display **206.**

The gesture sensing system **208** enables the apparatus **200** to provide a touchless UI that allows one or more users to interact with the apparatus **200.** Some example implementations of the gesture sensing system **208** have been provided in conjunction with Figs. 3 and 4. The apparatus **200** also includes one or more Input/Output (I/O) devices **216** in addition to the display **206** and the gesture sensing system **208.**

Fig. 2 is merely an example, which should not unduly limit the scope of the claims herein. It is to be understood that the specific designation for the apparatus **200** is provided as an example and is not to be construed as limiting the apparatus **200** to specific numbers, types, or arrangements of modules and/or components of the apparatus **200.** A person skilled in the art will recognize many variations, alternatives, and modifications of embodiments of the present disclosure. For example, in an alternative implementation, the memory **202** can be built into the processor **204** itself.

Fig. 3 is a schematic illustration of a first example implementation of the gesture sensing system **208** and various components thereof, in accordance with an embodiment of the present disclosure. With reference to Fig. 3, the gesture sensing system **208** includes one or more sensors, depicted as a sensor **302** in Fig. 3, and a plurality of radiation sources, depicted as a first radiation source **304a,** a second radiation source **304b** and a third radiation source **304c** in Fig. 3 (hereinafter collectively referred to as radiation sources **304).**

The radiation sources **304** are positioned around the sensor **302** as shown in Fig. 3, to enable gesture identification in two or three dimensions. In Fig. 3, there is shown an XYZ coordinate system **306** to indicate that the first example implementation of the gesture sensing system **208** is suitable for identifying multi-dimensional gestures.

Fig. 4 is a schematic illustration of a second example implementation of the gesture sensing system **208** and various components thereof, in accordance with an embodiment of the present disclosure; description of features in Fig. 3 pertains *mutatis mutandis* to Fig. 4, except where stated otherwise.

With reference to Fig. 4, the gesture sensing system **208** includes a sensor **402** and a plurality of radiation sources associated therewith, depicted as a first radiation source **404a,** a second radiation source **404b** and a third radiation source **404c** in Fig. 4 (hereinafter collectively referred to as radiation sources **404).** The gesture sensing system **208** also includes a sensor **406** and a plurality of radiation sources associated therewith, depicted as a first radiation source **408a,** a second radiation source **408b** and a third radiation source **408c** in Fig. 4 (hereinafter collectively referred to as radiation sources **408).**

In Fig. 4, there is shown an XYZ coordinate system **410** to indicate that the second example implementation of the gesture sensing system **208** is suitable for identifying multi-dimensional gestures.

The second example implementation of the gesture sensing system **208** has a substantially symmetric arrangement of the sensors **402** and **406,** and the radiation sources **404** and **408.** It will be appreciated that the second example implementation of the gesture sensing system **208** enables more robust gesture identification in the Y-direction. Moreover, the second example implementation of the gesture sensing system **208** facilitates more advanced gesture identification with a better resolution.

In some examples, the sensor **402** and the radiation sources **404** are positioned in a proximity of an upper periphery of the display **206,** while the sensor **406** and the radiation sources **408** are positioned in a proximity of a lower periphery of the display **206.** This potentially enables identification of a gesture performed over the display **206** and/or a symmetric position of the pointing object.

Figs. 3 and 4 are merely examples, which should not unduly limit the scope of the claims herein. It is to be understood that specific designations for the gesture sensing system **208** are provided as examples and are not to be construed as limiting the gesture sensing system **208** to specific numbers, types, arrangements, or relative positions of sensors and/or radiation sources. A person skilled in the art will recognize many variations, alternatives, and modifications of embodiments of the present disclosure.

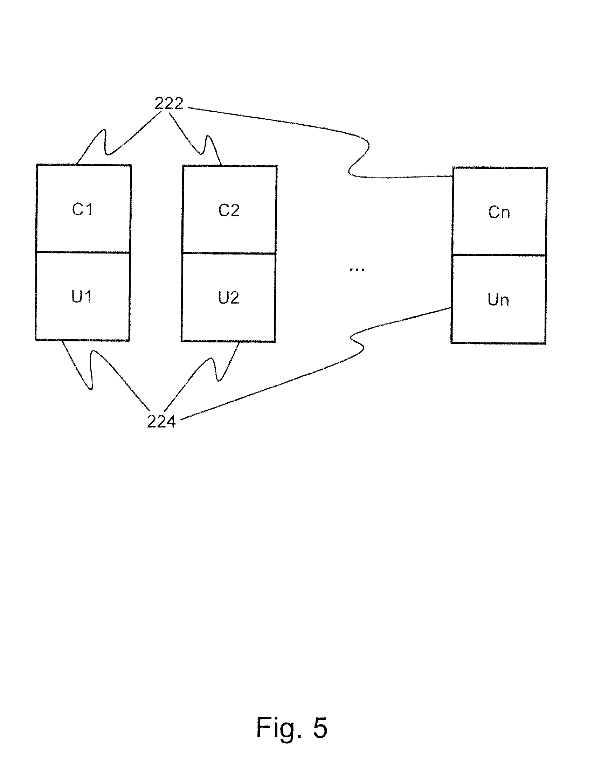

Fig. 5 is an illustration of an example UI flow, in accordance with an embodiment of the present disclosure. The UI flow pertains to several interlinked content items, depicted as **C500, C502, C504, C506, C508, C510, C512** and **C514** in Fig. 5. These content items include one or more of: images, videos, and/or HTML content, but are not limited thereto.

A given content item optionally includes one or more instructions for a user to perform one or more gestures defined for the given content item. Optionally, the instructions are provided by way of textual information, for example, such as *"move your hand left or right to change the image", "indicate your option with a number of fingers", "slide the pointer with a finger",* and so forth.

Additionally or alternatively, optionally, the instructions are provided by way of graphical information. With reference to Fig. 5, the content item **C502** includes graphical indicators for links **L1, L2** and **L3** to the content items **C510, C512** and **C514,** respectively. Likewise, the content item **C504** includes graphical indicators for links **L4, L5** to the content items **C506** and **C508,** respectively.

An example of the gesture sensing system configuration data **216** for the content items **C500, C502, C504, C506, C508, C510, C512** and **C514** has been provided in an example table below.

| Power Mode and Sensing Direction | Content Item | Explanation |
|---|---|---|
| P1 | Previously-displayed content item that is frozen on the display **206** | In the stand-by mode, the gesture sensing system **208** waits for a user to come in a close proximity of the apparatus **200.** |
| P2 X-direction (horizontal) | **C500** | The gesture sensing system **208** is configured to recognize a one-dimensional hand gesture in the X-direction, using medium-frequency polling. |
| | | When the user's hand moves from left to right (or vice versa), the content item **C502** is displayed. When the user's hand moves from right to left (or vice versa), the content item C504 is displayed. |
| P3 X-direction (horizontal) | **C502** | The gesture sensing system **208** is configured to recognize a one-dimensional finger gesture in the X direction, using high-frequency polling, thereby enabling the user to select one of the links **L1, L2** or **L3.** |
| | | Alternatively, the gesture sensing system **208** is configured to recognize a number of fingers shown by the user for selecting one of the links **L1, L2** or **L3.** For example, when the user shows one finger, the content item **C510** corresponding to the link **L1** is displayed. Likewise, when the user shows two fingers, the content item **C512** corresponding to the link **L2** is displayed. Similarly, when the user shows three fingers, the content item **C514** corresponding to the link **L3** is displayed. |
| P2 Y-direction (vertical) | **C504** | The gesture sensing system **208** is configured to recognize a one-dimensional hand gesture in the Y direction, using medium-frequency polling, thereby enabling the user to select one of the links **L4** or **L5.** |
| | | When the user's hand moves from up to down (or vice versa), the content item **C506** corresponding to the link **L4** is displayed. Likewise, when the user's hand moves from down to up (or vice versa), the content item **C508** corresponding to the link **L5** is displayed. |
| P2 Y-direction (vertical) | **C506** | The gesture sensing system **208** is configured to recognize a one-dimensional hand gesture in the Y-direction, using medium-frequency polling. |
| | | When the user's hand moves from down to up, the content item **C504** is displayed. |
| P2 Y-direction (vertical) | **C508** | The gesture sensing system **208** is configured to recognize a one-dimensional hand gesture in the Y-direction, using medium-frequency polling. |
| | | When the user's hand moves from up to down, the content item **C504** is displayed. Likewise, when the user's hand moves from down to up, the content item **C514** is displayed. |
| P2 Y-direction (vertical) | **C510** | The gesture sensing system **208** is configured to recognize a one-dimensional hand gesture in the Y-direction, using medium-frequency polling. |
| | | When the user's hand moves from up to down, the content item **C502** is displayed. |
| P2 Y-direction (vertical) | **C512** | The gesture sensing system **208** is configured to recognize a one-dimensional hand gesture in the Y-direction, using medium-frequency polling. |
| | | When the user's hand moves from up to down, the content item **C502** is displayed. |
| P6 X, Y and Z directions | **C514** | The gesture sensing system **208** is configured to recognize a three-dimensional hand gesture, using medium-frequency polling. |
| | | When the user's hand moves from up to down, the content item **C508** is displayed. Likewise, when the user's hand moves from left to right, the content item **C502** is displayed. |
| | | When the user's hand moves forward in the Z-direction, the content item **C514** is zoomed-in. |
| | | When the user's hand moves backward in the Z-direction, the content item **C514** is zoomed-out. |

In this manner, the gesture sensing system configuration data **216** is used to reduce power consumption of the apparatus **200.**

Fig. 5 is merely an example, which should not unduly limit the scope of the claims herein. A person skilled in the art will recognize many variations, alternatives, and modifications of embodiments of the present disclosure.

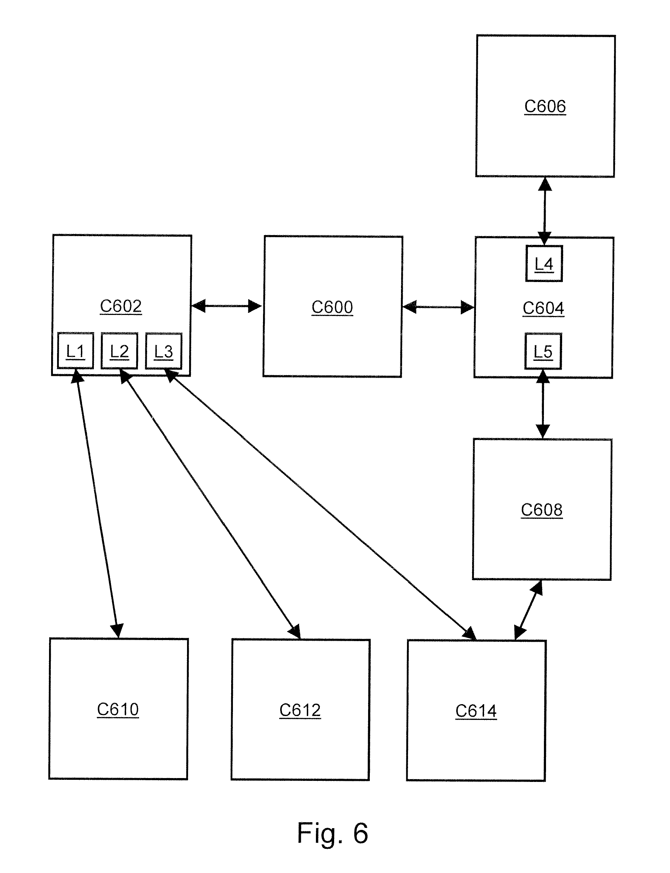

Fig. 6 is an illustration of steps of a method of operating a display with a gesture sensing system, in accordance with an embodiment of the present disclosure. The method is depicted as a collection of steps in a logical flow diagram, which represents a sequence of steps that can be implemented in hardware, software, or a combination thereof.

At a step **602,** one or more content items to be displayed on the display and gesture sensing system configuration data for the one or more content items are stored in a memory.

At a step **604,** at least one of the one or more content items is displayed on the display.

Optionally, the method includes an additional step at which one or more instructions are provided within the at least one of the one or more content items. These instructions are optionally provided for a user to perform one or more gestures defined for the at least one of the one or more content items. These instructions are beneficially based on the gesture sensing system configuration data for the at least one of the one or more content items.

At a step **606,** the gesture sensing system is employed to identify one or more gestures according to the gesture sensing system configuration data for the at least one of the one or more content items, as described earlier.

Optionally, the step **606** includes one or more of:
(i) using a resolution according to the gesture sensing system configuration data;
(ii) using a number of sensing dimensions according to the gesture sensing system configuration data;
(iii) using one or more of a position-based detection method and/or a phase-based detection method according to the gesture sensing system configuration data;
(iv) using a polling cycle time according to the gesture sensing system configuration data;
(v) determining a number of radiation sources and a number of sensors to be energized from the gesture sensing system configuration data;
(vi) determining a geometry of the radiation sources and the sensors to be energized from the gesture sensing system configuration data;
(vii) energizing the radiation sources and the sensors according to the geometry determined from the gesture sensing system configuration data; and/or
(viii) applying an amount of power to energized radiation sources according to the gesture sensing system configuration data.

At a step **608,** a next content item for display is determined based on the one or more gestures identified at the step **606**.

Thereafter, at a step **610,** the next content item is displayed on the display.

The steps **602** to **610** are only illustrative and other alternatives can also be provided where one or more steps are added, one or more steps are removed, or one or more steps are provided in a different sequence without departing from the scope of the claims herein.

Embodiments of the present disclosure provide a computer program product comprising a non-transitory computer-readable data storage medium having stored thereon computer-readable program code, which is executable by a processor to implement the method as described in conjunction with Fig. 6.

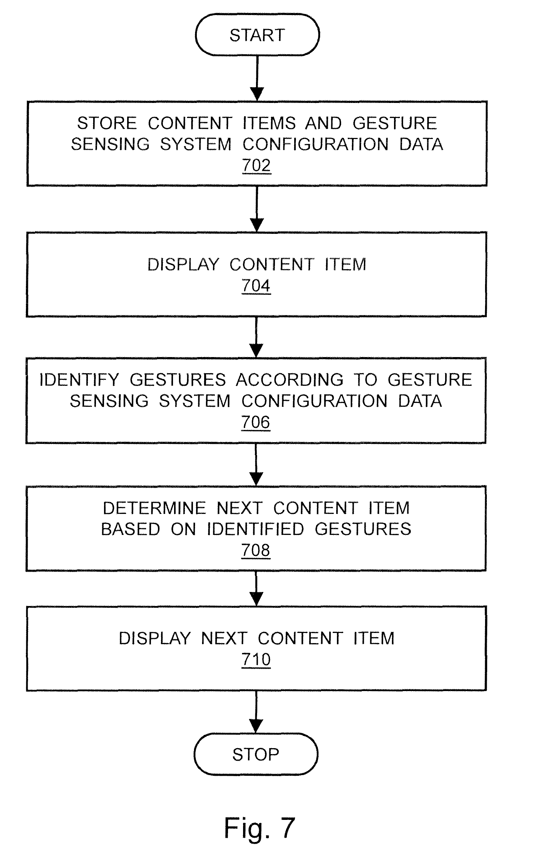

Fig. 7 shows an example embodiment of an interactive terminal **700.** The interactive terminal has a memory **710,** a central processing unit **712** and two gesture detectors **717** and **716.** The horizontal detector **716** is positioned below the display **718** and the vertical detector **716** at the side of the display **718.**

The memory **710** is used for storing information **7100** (Ci=C1, C2...Cn) to be rendered and to be shown in a display **718.** Each information Ci contains or is associated with a User Interface (UI) level definition table **7102** (Ui = U1, U2...Un). The information Ci can be for example an image, a video, an html content etc. The UI level definition table **7102** can contain information related to the resolution and to the dimensions (one, two, three dimensions) needed for controlling and giving feedback for related information content **7100.** In a preferred case, the UI level definition Ui determines the gesture detection method for the related information Ci.

The CPU **712** is used to select the programming information content Ci **7100** to be shown in the display **718.** As the content Ci is selected, the CPU further configures proximity sensors **717** and/or **716** based on Ui for the desired resolution and dimensions. This way each information content C1, C2, ... Cn can have different type of UI behavior for configuring performance (resolution of the user interface, dimensions of the user interface and therefore the power consumption). The UI definition table (configuration data for the content items) **7102** can be common for each content independently to which interactive terminal the content is directed to or it can be modified based on terminal type.

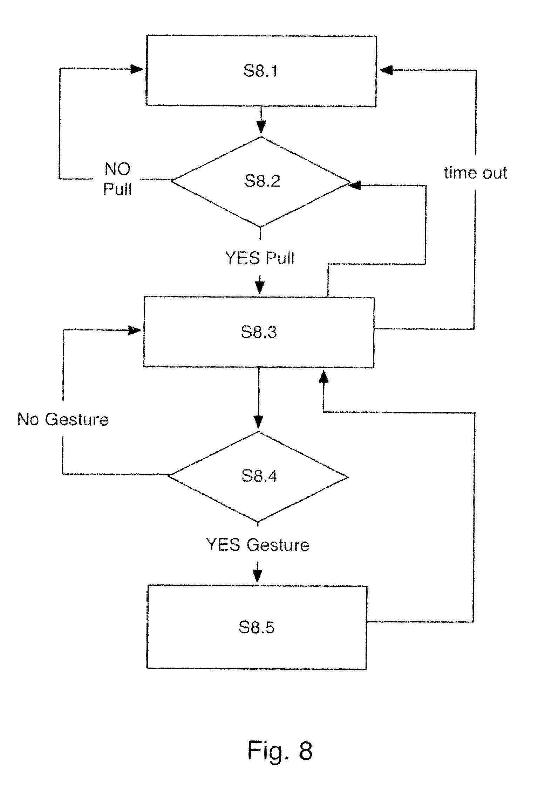

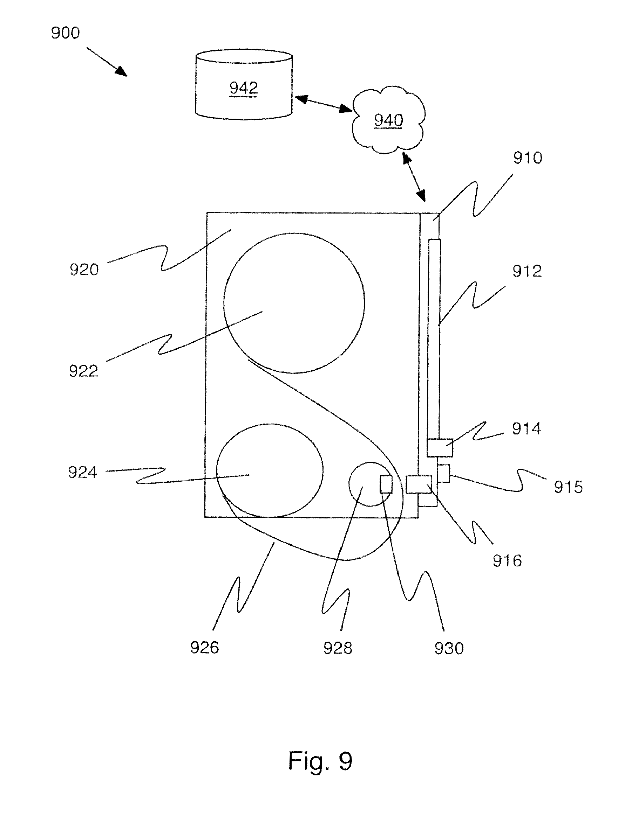

Fig. 8 is an exemplary schematic flow chart according to one or more aspects of the present disclosure. In this example, the terminal **910** may be attached to a towel dispenser **920** of Fig. 9. In step S8.1 the terminal **910** is in a first mode. In the first mode the bi-stable display shows default content or a last displayed portion of content. The proximity sensor **914** is turned OFF. In step S8.2 a signal from magnetic sensor **916** is analyzed. If there is no movement detected the process goes back to step S8.1. If movement is detected the process goes to step S8.3 and the terminal **910** is configured to be in a second mode. In step S8.3 proximity sensor **914** is turned ON. Additionally information content in the display **912** can be changed and other audio or visual content such as flashing LED's **915** can be presented. In step S8.4 a signal from proximity sensor **914** is analyzed. If there is no gesture detected the process goes back to step S8.3. If no gestures are detected after a predetermined time out the process goes further back to step S8.1 and returns to the first mode. If there is a gesture such as movement of a hand from left to right, new content is shown in the display **912** (step S8.5.). The process goes back to step S8.3 to continue in the second mode. The process can be configured to detect further gestures or further pulls of the towel when in the second mode.

In Fig. 9 a system **900** according to other aspects of the present disclosure is illustrated. An exemplary towel dispenser **920** is used to dispense towel **926.** An unused part of the towel **926** is stored in upper roll **922.** As the user pulls the towel **926,** it is dispensed from the upper roll **922.** The towel **926** moves rotating gear **928** while it is pulled. A permanent magnet **930** is connected to the rotating gear **928.** The permanent magnet **930** moves with the gear **928** as the towel **926** is pulled. The used part of the towel is collected by lower roll **924.** A terminal **910** is connected to front face of the towel dispenser **920.** The terminal **910** may be interactive and may include a bi-stable display **912** for displaying content for the user. The content can be delivered to the terminal **910** via a communication network **940,** such as the Internet from a service running in server system **942.** The content can be delivered to the terminal **910** in real time or before the content is used (i.e. caching, for example, two or more figures / pictures to be shown in the display **912).** A sensor, for example, a Hall-sensor, reed switch or other suitable sensing device **916** detects movement of the magnet **930.** As the movement is detected the terminal **910** is configured to alter / change information content in the display **912.** Additionally LED(s) **915** can be turned on or flashed to attract the users' attention. The movement detection can also be used to turn on a proximity detector/sensor **914** (such as an infra-red (IR) detector) in order to have a touchless user interface for the terminal **910.** The touchless user interface can be realized by several techniques based on detection of the electromagnetic waves. The interface may be based on the active, i.e. transceiving, or passive, i.e. receiving, approaches. An example of the passive approaches are the Passive Infrared Radiation (PIR) sensors which can detect the IR radiation by the users' body or body part. In the active approaches the selected electromagnetic wavelength is emitted and the back-scattered signal is measured. The used wavelengths include, but are not limited to, the visible, near-infrared or infrared wavelengths or the longer radio wavelengths. In at least one embodiment, the touchless interface may be based on reflectance IR approach where the light, emitted from one or more IR LEDs and reflected by user's hand, is measured using an IR sensor. The advantages of such an IR reflectance approach include low power consumption via short IR pulses, insensitivity to user wearing gloves and functionality through thick protective fronts such as Plexiglas. A user in the front of the terminal **910** can change information content in the display **912** by performing one or more pre-determined gestures in the proximity of the detector **914.** Additionally, LED(s) **915** can be flashed as the user performs a gesture to indicate a successful gesture. This is beneficial since some of the bi-stable displays have a slow response time. It might take 1-2 seconds to refresh the display. By flashing the lights the user knows that the gesture will have an impact on the information content to be displayed in the display **912.** In one or more embodiments, the proximity detector **914** can be utilized independently of the magnetic sensor **916.** The proximity sensor can be turned OFF after a time out if desired.

Modifications to embodiments of the present disclosure described in the foregoing are possible without departing from the scope of the present disclosure as defined by the accompanying claims. Expressions such as "including", "comprising", "incorporating", "consisting of", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. An apparatus comprising:
- a display (206, 912);
- a gesture sensing system (208);
- a processor (204); and
- a computer-readable program code stored in a memory,
wherein the processor, with the computer-readable program code, is configured to:
- store one or more content items (222) to be displayed on the display and a gesture sensing system configuration data for the one or more content items;
- display at least one of the one or more content items on the display; and
- employ the gesture sensing system to identify one or more gestures according to the gesture sensing system configuration data for the at least one of the one or more content items.

2. The apparatus of claim 1, wherein the gesture sensing system configuration data includes one or more of the following
- a resolution and a number of sensing dimensions to be used for gesture identification,
- at least one detection method to be used for gesture identification,
- a polling cycle time to be used for gesture identification,
- a geometry of the radiation sources and the sensors to be energized for gesture identification, and/or
- an amount of power to be applied to energized radiation sources.

3. The apparatus of claim 2, wherein the at least one detection method includes one or more of: a position-based detection method and/or a phase-based detection method.

4. The apparatus of any of the claims 1-2, wherein the gesture sensing system comprises:
- a plurality of radiation sources (304, 404, 408); and
- one or more sensors (302, 402, 406, 914),
wherein the gesture sensing system configuration data includes a number of radiation sources and a number of sensors to be energized for gesture identification.

5. The apparatus of any of the claims 1-4, wherein the processor, with the computer-readable program code, is configured to:
- determine a next content item (222) for display, based on the one or more gestures identified by the gesture sensing system; and
- display the next content item on the display.

6. The apparatus of any of the claims 1-5, wherein the at least one of the one or more content items (222) includes one or more instructions for a user to perform one or more gestures defined for the at least one of the one or more content items, wherein the one or more instructions are based on the gesture sensing system configuration data for the at least one of the one or more content items.

7. A method of operating a display with a gesture sensing system, comprising:
- storing, in a memory, one or more content items to be displayed on the display and gesture sensing system configuration data for the one or more content items;
- displaying at least one of the one or more content items on the display; and
- employing the gesture sensing system to identify one or more gestures according to the gesture sensing system configuration data for the at least one of the one or more content items.

8. The method of claim 11, comprising one or more of the following:
- using a resolution and a number of sensing dimensions for gesture identification according to the gesture sensing system configuration data,
- using one or more of a position-based detection method and/or a phase-based detection method for gesture identification according to the gesture sensing system configuration data, and/or
- determining a number of radiation sources and a number of sensors to be energized for gesture identification from the gesture sensing system configuration data.

9. The method of claim 7 or 8, comprising using a polling cycle time for gesture identification according to the gesture sensing system configuration data.

10. The method of any of the claims 7-9, comprising determining a number of radiation sources and a number of sensors to be energized for gesture identification from the gesture sensing system configuration data.

11. The method of claim 10, comprising:
- determining a geometry of the radiation sources and the sensors to be energized for gesture identification from the gesture sensing system configuration data; and
- energizing the radiation sources and the sensors according to the geometry determined from the gesture sensing system configuration data.

12. The method of any of the claims 7-11, comprising:
- determining a next content item for display based on the one or more gestures identified by the gesture sensing system; and
- displaying the next content item on the display.

13. The method of any of the claims 7-11, comprising providing, within the at least one of the one or more content items, one or more instructions for a user to perform one or more gestures defined for the at least one of the one or more content items, wherein the one or more instructions are based on the gesture sensing system configuration data for the at least one of the one or more content items.

14. A computer program product comprising a non-transitory computer-readable data storage medium having stored thereon computer-readable program code for operating a display with a gesture sensing system, the computer-readable program code being executable by a processor to:
- store one or more content items to be displayed on the display and gesture sensing system configuration data for the one or more content items;
- display at least one of the one or more content items on the display; and
- employ the gesture sensing system to identify one or more gestures according to the gesture sensing system configuration data for the at least one of the one or more content items.
